# EUROPEAN PATENT APPLICATION

(11) **EP 2 642 356 A2**
(43) Date of publication of application: **25.09.2013**
(21) Application number: 13156145.8
(22) Date of filing: 21.02.2013
(51) Int. Cl.: G04G 13/02, H04M 1/725

(54) **Method and Apparatus for Providing an Alarm Service in Mobile Terminal**

(30) Priority: 20.03.2012 KR 20120028095
(71) Applicant: Samsung Electronics Co., Ltd, Gyeonggi-do 443-742 (KR)
(72) Inventor: Lee, Sangcheol, 443-742 Gyeonggi-do (KR)
(74) Representative: Birchenough, Lewis

(57) **Abstract**

A method of providing an alarm service in a mobile terminal (100) is provided. The method includes setting a first alarm (201) and one or more alarm functions (310, 320, 330, 340) for the first alarm (201), determining whether the first alarm (201) should be operated based on the set alarm function (310, 320, 330, 340) when it is time to operate the first alarm (201), and operating the first alarm (201) or restricting the operation of the first alarm (201) based on the result of the determination.

## Description

### BACKGROUND OF THE INVENTION

### 1. Field of the Invention:

The present invention relates to a mobile terminal.More particularly, the present invention relates to a method and an apparatus for setting an alarm in a mobile terminal, and for operating and terminating the alarm using various sensors provided in the mobile terminal.

### 2. Description of the Related Art:

Recently, a mobile terminal has evolved to a multimedia device which may provide various supplementary services, such as an electronic notebook function, a game-playing function, a schedule management function, and the like. Similarly, as the mobile terminal provides various supplementary services, a user interface which allows a convenient management use of various kinds of supplementary services is essential.

An alarm service currently provided in a mobile terminal may be broadly divided into two methods. One is a method of setting an alarm and informing a user of the alarm so that the user may terminate the alarm. The other is a method of setting an alarm to be operated again after a preset period of time, even if the alarm is terminated by setting a snooze function.

However, according to the above stated alarm function of the related art, an alarm termination should be input by a user, and thus an unwanted alarm may be sounded. For example, when the user has set the alarm to 8:00AM and has also set the alarm to 8:30AM in preparation for the situation that he/she cannot wake up at 8:00AM, even if the user has terminated the alarm and has woken up at 8:00AM, if the user does not turn off another alarm which has been set to 8:30AM, the alarm will be sounded again at 8:30AM. This cannot be an active and smart alarm service.

Therefore, a need exists for a method and an apparatus for providing an active and smart alarm service using various sensors included in a mobile terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below.Accordingly, an aspect of the present invention is to provide a method and an apparatus for providing an active and smart alarm service using various sensors included in a mobile terminal.

In accordance with an aspect of the present invention, a method of providing an alarm service in a mobile terminal is provided. The method includes setting a first alarm and one or more alarm functions for the first alarm, determining whether the first alarm should be operated based on the set alarm function when it is time to operate the first alarm, and operating the first alarm or restricting the operation of the first alarm based on the result of the determination.

In accordance with another aspect of the present invention, a mobile terminal for providing an alarm service is provided. The terminal includes an alarm unit for sounding an alarm, a storage unit for storing alarm setting information which sets a first alarm and one or more alarm functions for the first alarm, a position detecting unit for detecting position information of the mobile terminal, a sensor for detecting a movement or state of the mobile terminal, and a controller for determining whether the first alarm is operated based on the above-set alarm function when it is time to operate the first alarm, and for operating the first alarm or restricting the operation of the first alarm based on the result of the determination.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

Theabove and other aspects, features, and advantages of certain exemplary embodiments of the present invention will be more apparent from the following description taken in conjunction with the accompanying drawings, in which:

FIG. 1 is a block diagram illustrating an internal structure of a mobile terminal according to an exemplary embodiment of the present invention;

FIG. 2 illustrates a user interface of a mobile terminal for setting an alarm according to an exemplary embodiment of the present invention;

FIG. 3 illustrates a user interface of a mobile terminal for setting an arbitrary alarmaccording to an exemplary embodiment of the present invention;

FIG. 4 illustrates a user interface for setting a cooperative functionaccording to an exemplary embodiment of the present invention;

FIG. 5 illustrates a user interface for setting a position-based function for alarm 1 according to an exemplary embodiment of the present invention;

FIG. 6 illustrates a user interface for setting a movement-based function for alarm 1 according to an exemplary embodiment of the present invention;

FIG. 7 illustrates a user interface for setting a periodic alarm extension for alarm 1 according to an exemplary embodiment of the present invention;

FIG. 8 is a flowchart illustrating a process of determining whether to operate an alarm based on a position or movement of a mobile terminal according to an exemplary embodiment of the present invention;

FIG. 9 is a flowchart illustrating a process of operating an alarm according to whether a linkage function has been set in a mobile terminal according to an exemplary embodiment of the present invention; and

FIG. 10 is a flowchart illustrating a periodic alarm extension function operation process of a mobile terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

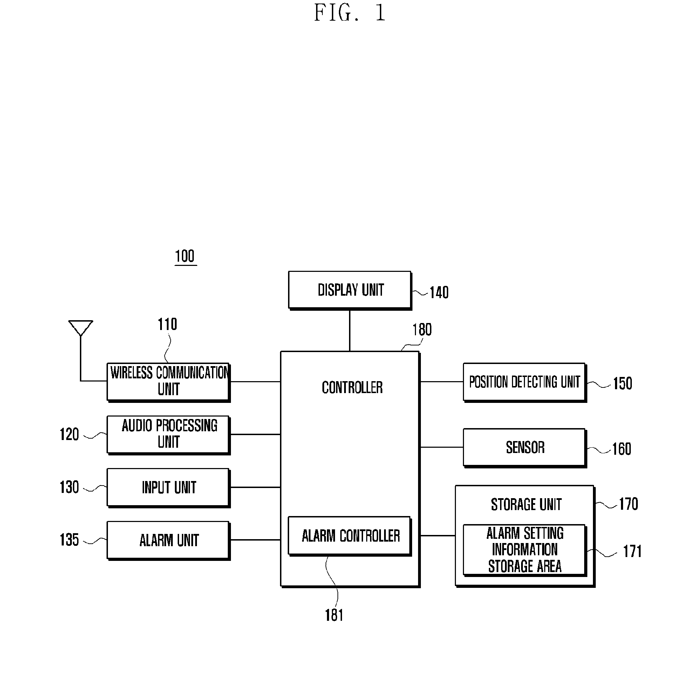

FIGs. 1 through 10, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

FIG. 1 is a block diagram illustrating an internal structure of a mobile terminal according to an exemplary embodiment of the present invention.

Referring to FIG. 1, a portable terminal 100 may include a wireless communication unit 110, an audio processing unit 120, an input unit 130, a display unit 140, a position detecting unit 150, a sensor 160, a storage unit 170, and a controller 180.

The wireless communication unit 110 performs a function of transmitting and receiving data for wireless communication of the mobile terminal 100. The wireless communication 110 may comprise a Radio Frequency (RF) transmitter which up-converts and amplifies the frequency of a transmitted signal, and an RF receiver which low-noise amplifies a received signal and down-converts the frequency. Furthermore, the wireless communication unit 110 may receive data through a wireless channel so as to output the received data to the controller 180, and transmit the data outputted from the controller 180 through the wireless channel.

The audio processing unit 120 may comprise a COder/DECoder (CODEC), and the CODEC may comprise a data CODEC for processing packet data. and an audio CODEC for processing an audio signal, such as voice, and the like. The audio processing unit 120 converts a digital audio signal into an analog audio signal through an audio CODEC so as to replay the converted signal through a speaker (SPK), and converts an analog audio signal inputted from a microphone (MIC) into a digital audio signal through an audio CODEC.

The alarm unit 135 operates an alarm when receiving a command for operating an alarm from the controller 180. The alarm may be operated by a bell, a vibration, a flicker of a screen, and the like, but the present invention is not limited thereto.

The input unit 130 receives a user input for controlling the mobile terminal 100, generates an input signal and transmits the generated input signal to the controller 180. The input unit 130 may comprise a keypad including a number key and a direction key, and may be formed as a certain function key in one side of the mobile terminal. Furthermore, the input unit 130 may also be formed as a touch screen.

The display unit 140 may be formed by a Liquid Crystal Display (LCD), Organic Light Emitting Diodes (OLEDs), Active Matrix Organic Light Emitting Diodes (AMOLEDs), and the like, and visibly provides a menu, inputted data, function setting information, and other various kinds of information to a user. The display unit 140 outputs a booting screen, an idle screen, a menu screen, a calling screen, and other application screens of the mobile terminal 100.

The position detecting unit 150 detects a geographic position of the mobile terminal 100, and transmits the detected position to the controller 180. According to an exemplary embodiment of the present invention, the geographical position may mean the geographical longitude and latitude. The position detecting unit 150 may include a Global Position System (GPS) module to obtain position information of the mobile terminal 100. The GPS module may obtain information on the position and moving speed of the current user by receiving GPS information from the GSP satellite so as to transmit the obtained information to the controller 180. Furthermore, when the GPS module is not provided, the position detecting unit 150 may calculate the position of the mobile terminal 100 through the position information signal obtained from Wi-Fi or a network.

The sensor 160 may include all kinds of sensors for obtaining movement, impact, direction and tilt information, and the like. To this end, the sensor 160 may include a gyro sensor, a motion sensor, a proximity sensor, and the like.

The storage unit 170 stores programs and data needed for operation of the mobile terminal 100, and may be divided into a program area and a data area. The program area may store a program for controlling an overall operation of the mobile terminal 100, an operating system for booting the mobile terminal 100, an application program needed for replay of a multimedia content, and an application function needed for other optional functions, such as a camera function, a sound replay function, an image display or a moving picture replay function, and the like. The data area is an area where data generated according to use of the mobile terminal 100 is stored, and may store an image, a moving picture, a phonebook, audio data, and the like.

According to an exemplary embodiment of the present invention, the storage unit 170 may further include an alarm setting information storage area 171 for storing alarm setting information for an alarm which is set by a user.

The controller 180 controls overall operation of each component of the mobile terminal. More particularly, the controller 180 controls an overall operation of operating and terminating an alarm using various sensors provided in the mobile terminal. To this end, the controller 180 may further include an alarm controller 181.

When it is time to operate a first alarm, the alarm controller 181 determines whether the first alarm should be operated based on the preset alarm function, and the operation of the first alarm is started or restricted according to the result of the determination. Here, the alarm function is stored as alarm setting information of the storage unit.

The alarm function may include at least one of a linkage function, a position-based function, a movement-based function, and a periodic alarm extension function.

According to an exemplary embodiment of the present invention, the alarm setting information may be set by the linkage of the first alarm with the second alarm, the operation of which is determined according to whether the termination input of the first alarm is received. Here, when it is time to operate the second alarm, the alarm controller 181 operates the first alarm and determines whether the termination input on the first alarm is received. Furthermore, when the termination input is received, the alarm controller 181 limits the operation of the second alarm, and when the termination input is not received, the alarm controller 181 controls the second alarm to be operated.

According to another exemplary embodiment of the present invention, the position where the operation of the first alarm is limited may be set by the alarm setting information. Here, when it is time to operate the first alarm, the alarm controller 181 recognizes the position information of the mobile terminal through the position detecting unit 150. In a case where the current position of the mobile terminal is the alarm operation restriction position, the alarm controller 181 may restrict operation of the first alarm.

According to another exemplary embodiment of the present invention, the operation state of the mobile terminal, which restricts operation of the first alarm, may be set by the alarm setting information. Here, when it is time to operate the first alarm, the alarm controller 181 recognizes whether the mobile terminal is moved through the sensor. In a case where the movement of the mobile terminal isdetected, the alarm controller 181 may restrict operation of the first alarm.

According to another exemplary embodiment of the present invention, when receiving an input of a predefined pattern while operating the first alarm, the alarm controller 181 may extend the termination time of the first alarm according to the number of repetitions of the received pattern.

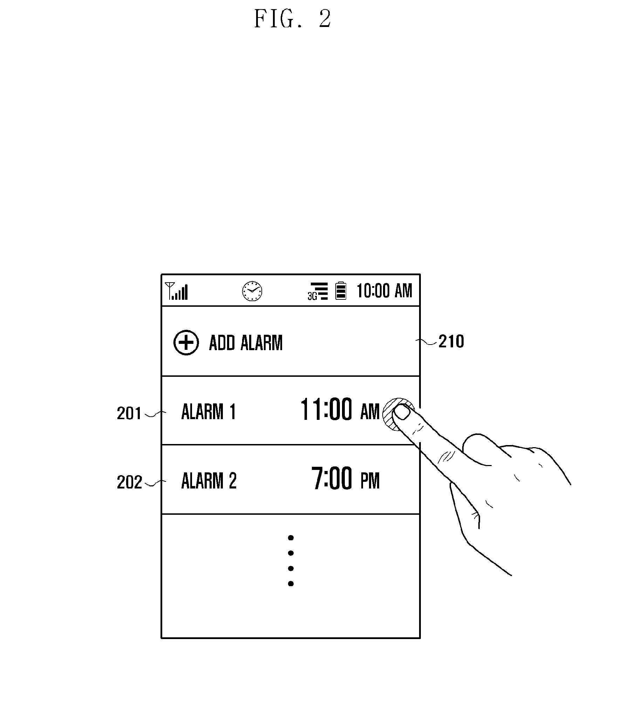

FIG. 2 illustrates a user interface of a mobile terminal for setting an alarm according to an exemplary embodiment of the present invention.

Referring to FIG. 2, when receiving a user input for setting an alarm, the mobile terminal 100 may set one or more alarms 201 and 202. A user may set an alarm other than an already-set alarm by selecting an item of alarm addition 210.

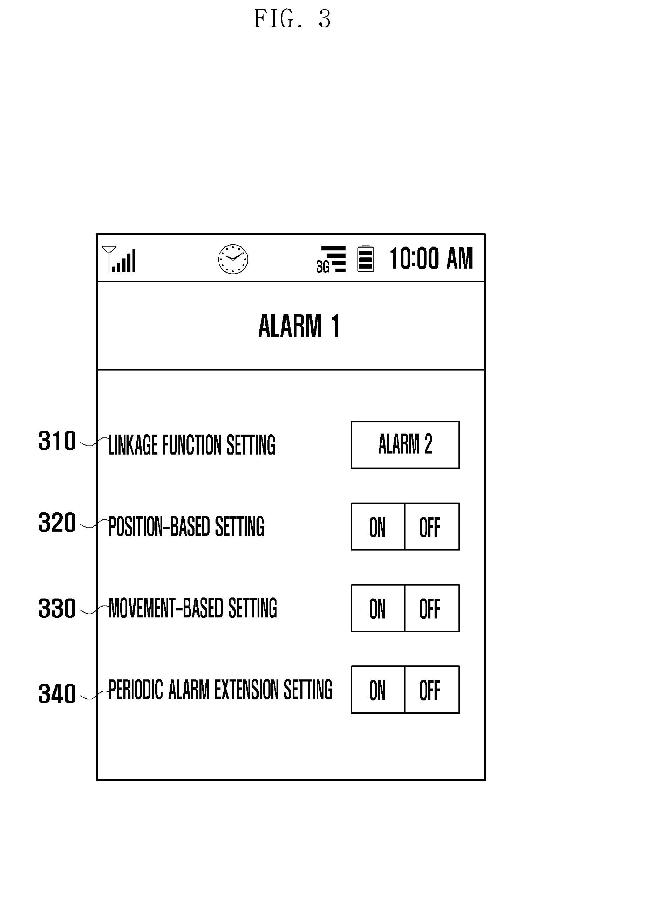

As illustrated in FIG. 2, when the user selects an arbitrary alarm (i.e., in the case of FIG. 2, alarm 1), user interfaces shown in FIG. 3 may be illustrated as described below.

FIG. 3 illustrates a user interface of a mobile terminal for setting an arbitrary alarmaccording to an exemplary embodiment of the present invention.

According to an exemplary embodiment of the present invention, a user may set a plurality of alarm functions for an arbitrary alarm which has been set. The alarm function may include a linkage function, a position-based function, a movement-based function, a periodic alarm extension function, and the like.

The linkage function refers to a function for determining whether to operate an arbitrary alarm according to whether a termination input of another alarm is received or whether movement of the mobile terminal 100 isdetected. For example, in a state in which the first alarm has been terminated, if it is time to operate the second alarm linked with the first alarm, and if the movement of the mobile terminal 100 isdetected, the second alarm may not be operated. Furthermore, in a state in which the first alarm is operated, if the first alarm is terminated due to reception of an explicit termination order, the second alarm linked with the first alarm may not be operated at the time point when the second alarm is operated.

The position-based function refers to a function of determining whether to operate an alarm depending on the position of the mobile terminal 100. For example, in a case where the mobile terminal is positioned in a location where there is little noise, such as a library, a school, a company, and the like, the alarm operation of the mobile terminal 100 may be restricted.

The movement-based function refers to a function of determining whether to operate an alarm depending on whether the mobile terminal 100 is moved. For example, when the user sets an alarm for a morning call, if the user is awake, it is not necessary for the alarm to be operated. As such, at the time point of operating the alarm of the mobile terminal 100, if the mobile terminal 100 is moving or a movement isdetected, the alarm operation of the mobile terminal 100 may be restricted.

The periodic alarm extension setting function refers to a function of extending the termination time point of the alarm according to the number of times of repetition of a detected movement with a preset input.For example, a movement, such as shaking and turnover, is detected at the time point of alarm termination of the mobile terminal 100. When an alarm for a morning call which is set by the user is being operated, if the user turns over the mobile terminal 100 three times, the morning call may be set to be repeated at 5 minute intervals for three times.

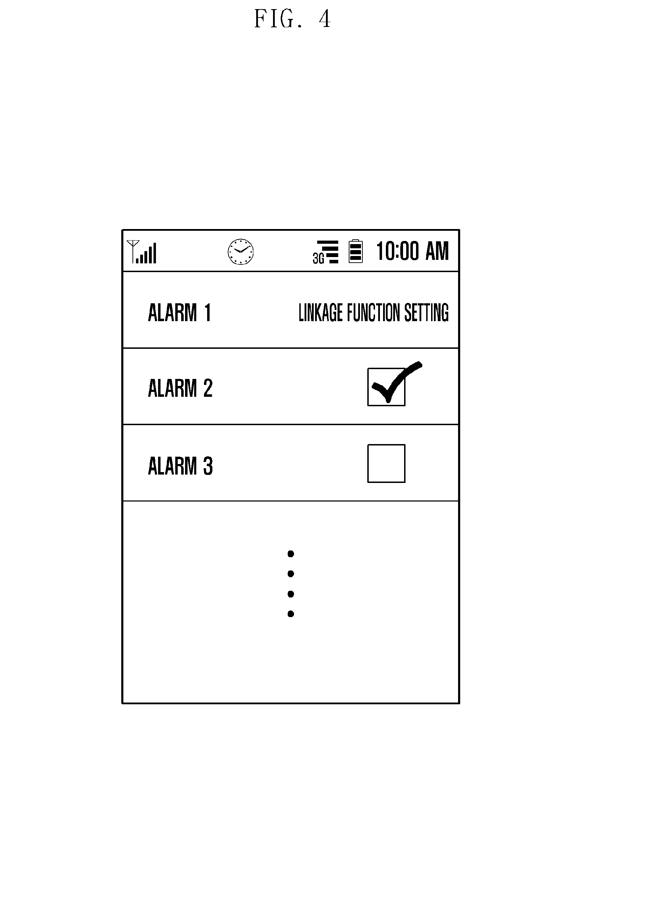

Referring to FIG. 3, the user interfaces for the linkage function, the position-based function, the movement-based function, and the periodic alarm extension function are illustrated in reference numerals 310, 320, 330 and 340.A user interface for the linkage function is illustrated in FIG. 4.

FIG. 4 illustrates a user interface for setting a cooperative functionaccording to an exemplary embodiment of the present invention.

Referring to FIG. 4, an example of setting a linkage function for alarm 1 is provided. A user may set an alarm different from alarm 1, and a linkage function and it is possible to link alarm 1 with another alarm by checking a check box.

After setting the link setting, when it is time to operate an alarm for alarm 1, operation of alarm 1 is determined according to whether a termination input of alarm 2 linked with alarm 1 has been received or whether a movement of the mobile terminal 100 has beendetected.

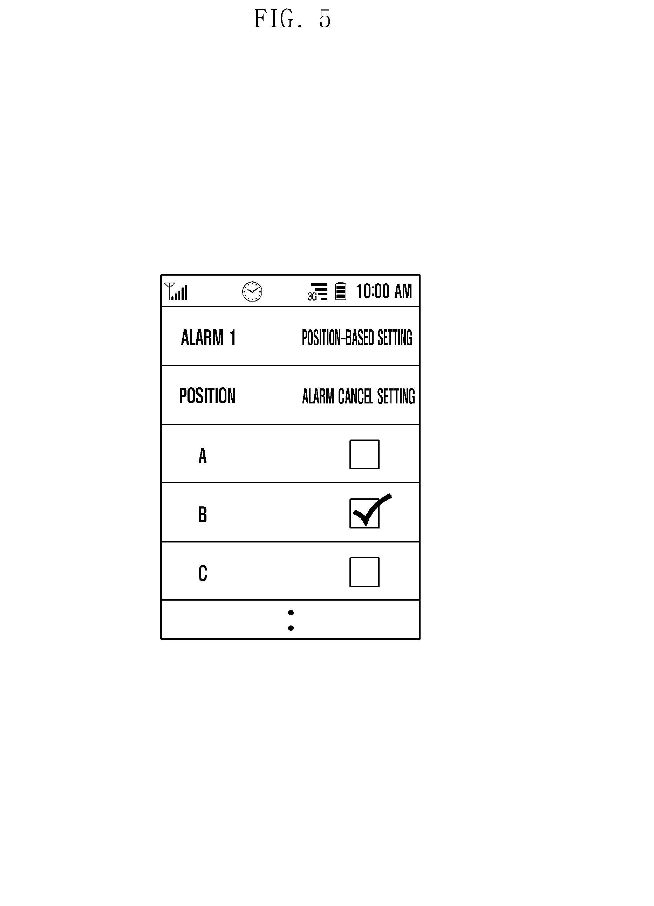

FIG. 5 illustrates a user interface for setting a position-based function for alarm 1 according to an exemplary embodiment of the present invention.

Referring to FIG. 5, a user may input at least one or more sets of position information, such as A, B, C, and the like. The position information may include geographic latitude and longitude information. Furthermore, a user may set whether to cancel an alarm at respective positions so that the alarm is not sounded. For example, when the user is positioned in a library, if a loud alarm is sounded in a state in which there is little noise, the sound may annoy people in the library, so the alarm may be set not to be sounded.

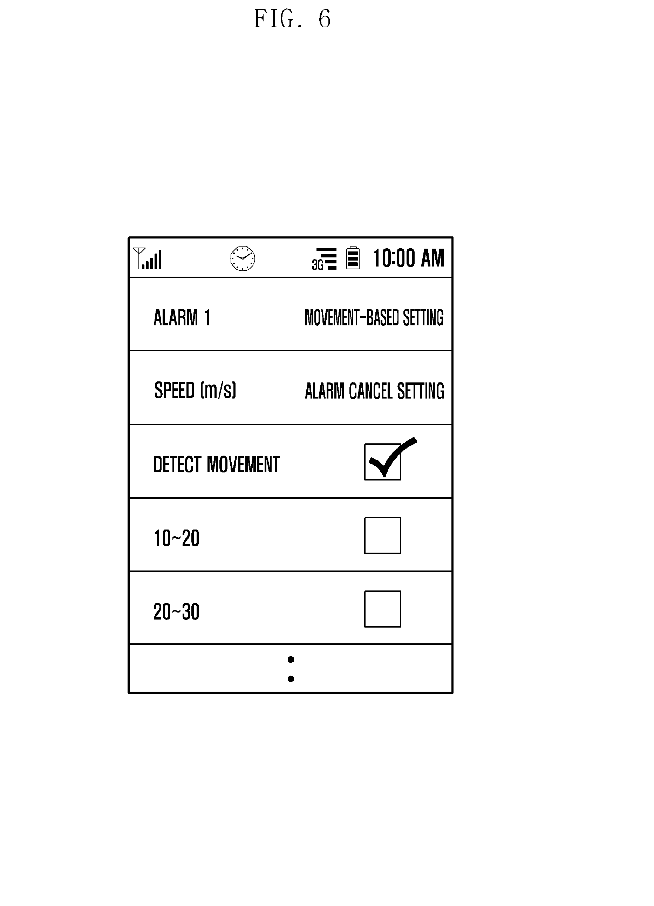

FIG. 6 illustrates a user interface for setting a movement-based function for alarm 1 according to an exemplary embodiment of the present invention.

Referring to FIG. 6, a user may separately input movement speeds of the mobile terminal for different sections. The movement detecting field illustrated in FIG. 6 means a case in which minute vibration or movement isdetected. Furthermore, the user may set whether to cancel an alarm so that the alarm is not sounded for each speed section. For example, when the user is awake and moving, the morning alarm does not need to be operated, so the alarm may be set not to be sounded.

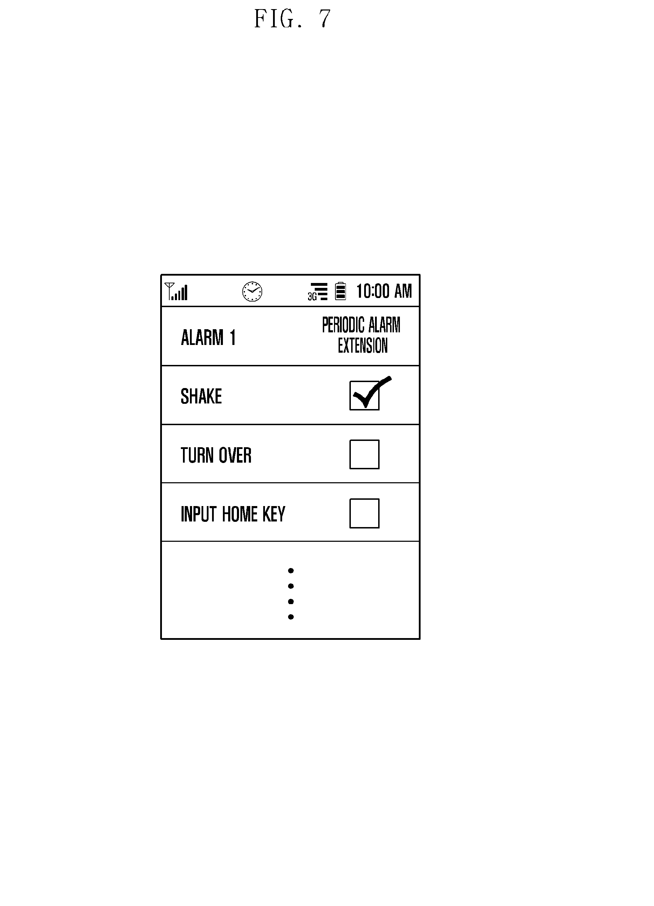

FIG. 7 illustrates a user interface for setting a periodic alarm extension function for alarm 1 according to an exemplary embodiment of the present invention.

Referring to FIG. 7, a user may set to extend the termination time point of the alarm according to the number of times of repetition of the input through an input, such as a preset movement at the time point of the alarm termination of the mobile terminal 100. For example, as illustrated in FIG. 7, it is assumed that the alarm termination time point has been set to be extended through shaking. Furthermore, it is assumed that the user has shaken the mobile terminal 100 three times at regular intervals in a case where the alarm is operated when it is time to operate alarm 1. Here, alarm 1 is arbitrarily terminated at the current time point, but the number of times of alarm operation is extended by three times. FIG. 7 illustrates only shaking, but it is possible to turn over the mobile terminal 100 or input a physical button key, such as a home key.

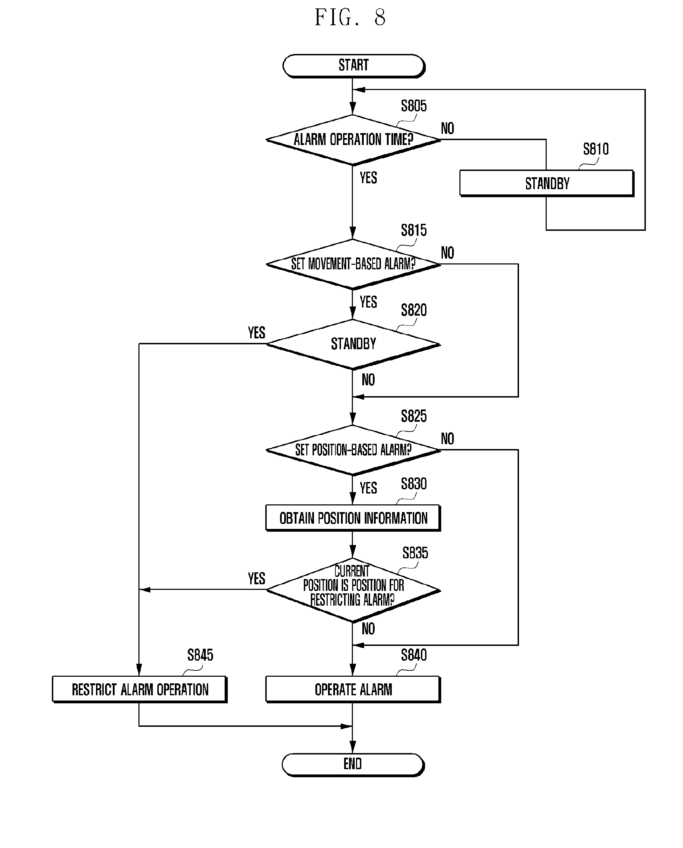

FIG. 8 is a flowchart illustrating a process of determining whether to operate an alarm based on a position or movement of a mobile terminal according to an exemplary embodiment of the present invention.

Referring to FIG. 8, the controller 180 of the mobile terminal 100 determines whether it is time for operating an alarm at step 805. If it is not yet time to operate the alarm, the controller 180 stands by until it is time to operate the alarm at step 810.

If it is time to operate the alarm, the controller 180 determines whether the movement-based function has been set at step 815. In a case where the mobile terminal 100 moves faster than a certain speed, the user may set not to operate an alarm.

In a case where the movement-based function is not set, the process turns to step S825, which is described below.

On the other hand, if the movement-based function has been set, the controller 180 may obtain position information of the mobile terminal 100 by operating the position detecting unit 150 in order to determine whether the mobile terminal 100 is moving. If the position information is changed for more than a certain distance based on the unit time, the controller 180 may determine that the mobile terminal 100 is moving. Furthermore, the controller 180 may operate the sensor 160 in order to determine whether a movement or impact is detected in the mobile terminal 100. A movement or impact, which is detected through a gyro sensor, a proximity sensor, a motion sensor, and the like, included in the sensor 160, is transmitted to the controller 180.

The controller 180 may determine whether the mobile terminal 100 is moving through the position detecting unit 150 or the sensor 160 at step 820. If the mobile terminal 100 is moving, the controller 180 restricts operation of the alarm at step 845.

If the mobile terminal 100 is at a stopped state, the controller 180 determines whether the position-based function has been set at step 825. In a case where the position-based function has not been set, the controller 180 operates the alarm at step 840.

On the other hand, in a case where the position-based function has been set, the controller 180 obtains position information at step 830. The controller 180 may obtain position information of the mobile terminal 100 through a GPS signal by operating the position detecting unit 150 of the mobile terminal 100. The position information may be geographical latitude and longitude information. The controller 180, which has obtained the position information of the mobile terminal 100, determines whether the current position is an alarm restriction position at step 835. The user may predefine the alarm restriction position through a user interface as in FIG. 5.

In a case where the current position is not an alarm restriction position, the controller 180 may operate an alarm at step 840. On the other hand, in a case where the current position is the alarm restriction position, the controller 180 restricts operation of an alarm at step 845.

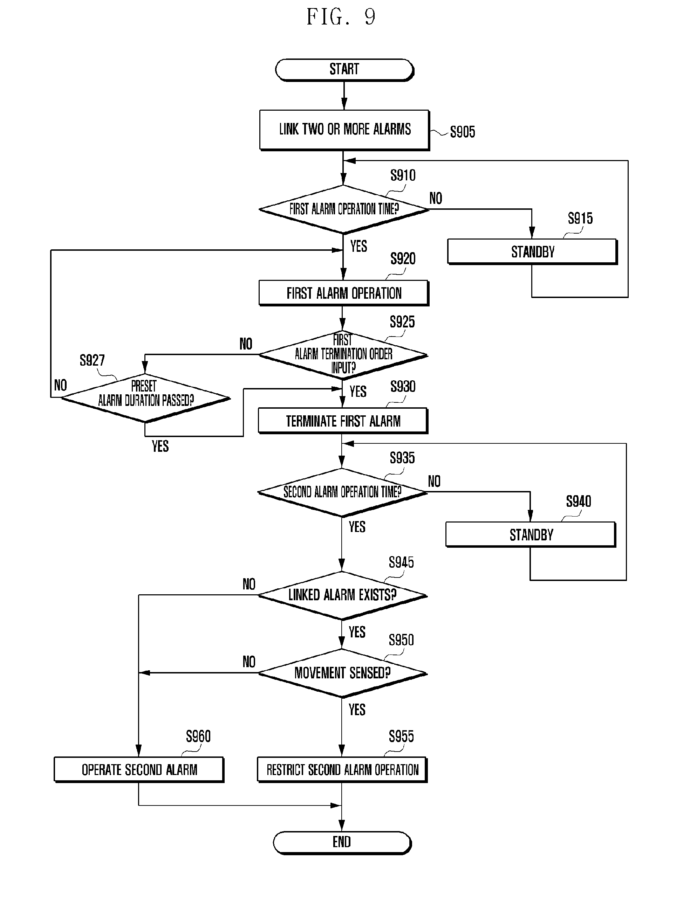

FIG. 9 is a flowchart illustrating a process of operating an alarm according to whether a linkage function has been set in a mobile terminal according to an exemplary embodiment of the present invention.

Referring to FIG. 9, the controller 180 links at least two alarms at step 905. The link setting refers to setting for determining whether to operate an arbitrary alarm according to whether a termination input of another alarm is received or whether a movement of the mobile terminal 100 isdetected. In the exemplary embodiment described below, the first alarm has been linked with the second alarm, and it is assumed that the alarm time of the first alarm is earlier than that of the second alarm.

The controller 180 determines if it is time to operate the first alarm at step 910. If it is not yet time to operate the first alarm, the controller 180 stands by until it is time to operate the first alarm at step 915.

On the other hand, if it is time to operate the first alarm, the controller 180 operates the first alarm at step 920 and determines whether a termination order for the first alarm has been inputted at step 925. Even if an explicit termination order for the first alarm has not been inputted, the controller 180 may terminate operation of the first alarm according to whether the alarm has been continually operated for a preset time at step 927.

On the other than, in a case where the controller has received a termination order for the first alarm from the user in step S925, the controller 180 terminates the first alarm at step 930.

Furthermore, the controller 180 determines whether it is time to operate the second alarm at step 935. If it is not time to operate the second alarm, the controller stands by until it is time to operate the second alarm at step 940.

On the other hand, in a case where it is time to operate the second alarm, the controller 180 determines whether there is a linked alarm at step 945. If there is no linked alarm, the controller 180 operates the second alarm at step 960.

If there is a linked alarm, the controller 180 determines whether a movement of the mobile terminal 100 is detected at step 950. To this end, the controller 180 may obtain information on whether the mobile terminal 100 is moved and a movement speed by operating the GPS module of the position detecting unit 150 of the mobile terminal 100. The controller 180 may obtain information on whether the mobile terminal 100 is moved based on information, such as a tilt, movement, impact state, and the like, of the mobile terminal, which is transmitted from the sensor 160.

When the movement of the mobile terminal 100 isdetected, the controller 180 may restrict operation of the second alarm at step 955. It is because it is possible to assume that the user has woken up if a movement of the mobile terminal 100 is detected at the time of operating the second alarm in a state in which the first alarm has been set to be linked with the second alarm.

On the other hand, in a case where the movement of the mobile terminal 100 is notdetected, the controller 180 may operate the second alarm at step 960.

In the above, an exemplary embodiment of determining whether the second alarm is to be operated after the termination of the first alarm according to whether the movement of the mobile terminal 100 isdetected, in the case in which the second alarm is set to be linked with the first alarm, has been described, but whether the second alarm is to be operated may not be necessarily determined according to whether the movement isdetected.

For example, when it is time to operate the second alarm, whether the second alarm is to be operated may be determined according to whether the termination input for the first alarm has been received. It is because it is not necessary to operate the second alarm if the first alarm has been explicitly terminated after the user wakes up in a state in which the user has set the first alarm to be linked with the second alarm for a morning call.

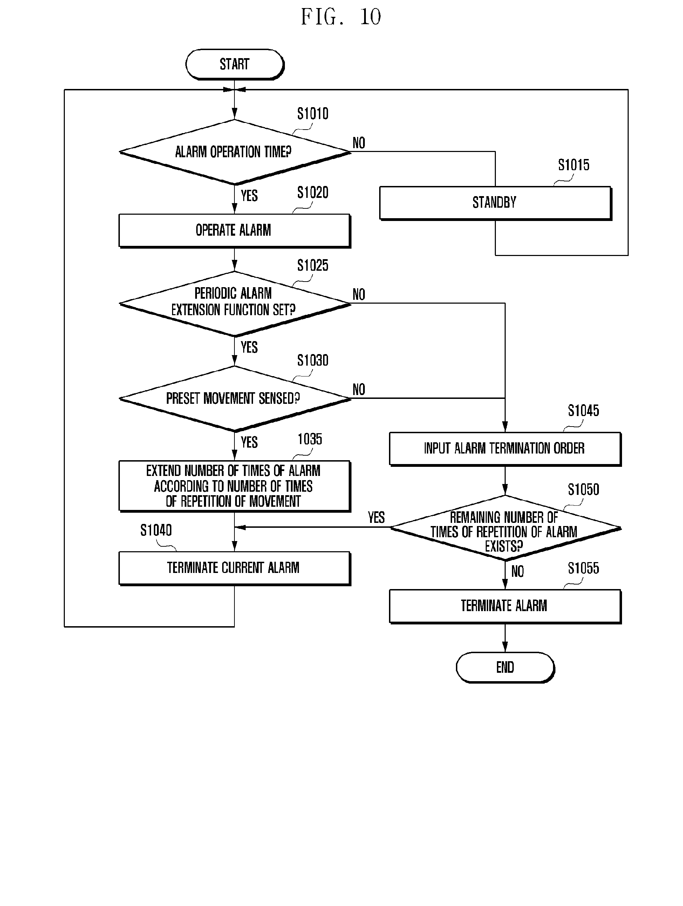

FIG. 10 is a flowchart illustrating a periodic alarm extension function operation process of a mobile terminal according to an exemplary embodiment of the present invention.

Referring to FIG. 10, the controller 180 determines if it is time to operate an alarm at step 1010. If it is not timeto operate an alarm, the controller stands by until it is time to operate an alarm at step 1015.

If it is timeto operate an alarm, the controller 180 operates an alarm at step 1020 and determines whether a periodic alarm extension function has been set at step 1025. The periodic alarm extension function may be set when an alarm function for the arbitrary alarm is set.

In a case where the periodic alarm extension function is set, the controller 180 determines whether a movement of a pattern which has been set has been detected at step 1030. The pattern which has been set includes shaking, turnover, inputting of a home key, and the like, but the present invention is not limited to such actions. The controller 180 may obtain and utilize information, such as a tilt, movement, impact state, and the like, of the mobile terminal 100, which is inputted from the sensor 160, in order to detect the movement pattern of the mobile terminal 100.

The controller 180 extends and sets the number of times of alarm operation according to the number of times of repetition of movement which has been set at step 1035. For example, it is assumed that the preset movement is shaking. In this case, if the controller 180 has detected three times of shaking of the mobile terminal at regular intervals through the sensor 160, the alarm is controlled to be operated by repeating three times after the termination of the alarm operation.

After the alarm operation is set, the controller 180 terminates an alarm currently under operation at step 1040.

According to the above-described exemplary embodiment of the present invention, after the user sets a morning call, when the morning call is under operation, the same pattern may be repeated, for example, the mobile terminal 100 may be turned over or shaken to extend the number of alarm operations in order to avoid an inconvenient action of setting an alarm extension by entering the alarm menu.

In steps S1025 and S1030, in a case where the periodic alarm extension function is not set or the preset pattern movement is notdetected, the controller 180 receives an alarm termination order input at step 1045. Thereafter, the controller 180 determines whether there is a remaining number of times of repetition of an alarm at step 1050.

In a case where there is a remaining number of times, the controller 180 should enter the standby mode to operate the alarm, and thus the controller 180 terminates the current alarm at step 1040, and returns to step S1010.

On the other hand, in a case where there is not a remaining number of times, the controller 180 finally terminates the alarm operation at step 1055.

According to the above-described exemplary embodiment of the present invention, the alarm is operated or terminated using various sensors provided in the mobile terminal 100, and thus it is possible to actively provide a smart alarm service.

According to exemplary embodiments of the present invention, an actively smart alarm service may be provided as the alarm is operated or terminated using various sensors included in the mobile terminal.

While the invention has been shown and described with reference to certain exemplary embodiments thereof, it will be understood by those skilled in the art that various changes in form and details may be made therein without departing from the spirit and scope of the invention as defined in the appended claims and their equivalents.

## Claims

1. A method of providing an alarm service in a mobile terminal, the method comprising:
setting a first alarm and one or more alarm functions for the first alarm;
determining whether the first alarm should be operated based on the set alarm function when it is time to operate the first alarm; and
operating the first alarm or restricting the operation of the first alarm based on the result of the determination.

2. The method of claim 1, further comprising:
setting a second alarm, operation of which is determined according to whether a termination input for the first alarm is received, in conjunction with the first alarm.

3. The method of claim 2, wherein the determining of whether the first alarm should be operated further comprises:
terminating an operation of the first alarm;
determining whether the termination input for the first alarm is received after the first alarm is operated when it is time to operate the second alarm; and
restricting the operation of the second alarm when receiving the termination input, and operating the second alarm when the termination input is not received.

4. The method of claim 1, wherein the setting of the first alarm sets a position in which an operation of the first alarm is restricted.

5. The method of claim 4, wherein the determining of whether the first alarm should be operated further comprises:
recognizing position information of the mobile terminal when it is time to operate the first alarm; and
restricting the operation of the first alarm when a current position of the mobile terminal is the position in which the operation of the first alarm is restricted.

6. The method of claim 1, wherein the setting of the first alarm sets an operation state of the mobile terminal in which an operation of the first alarm is restricted.

7. The method of claim 6, wherein the determining of whether the first alarm should be operated further comprises:
recognizing whether the mobile terminal is moved when it is time to operate the first alarm; and
restricting the operation of the first alarm when a movement of the mobile terminal is detected.

8. The method of claim 1, further comprising:
operating the first alarm;
receiving an input of a predefined pattern; and
extending a termination time of the first alarm according to a number of times of repetition of the received pattern.

9. The method of claim 1, wherein the alarm functions include at least one of a linkage function, a position-based function, a movement-based function, and a periodic alarm extension function.

10. A mobile terminal for providing an alarm service, the mobile terminal comprising:
an alarm unit for sounding an alarm;
a storage unit for storing alarm setting information which sets a first alarm and one or more alarm functions for the first alarm;
a position detecting unit for detecting position information of the mobile terminal;
a sensor for detecting a movement or state of the mobile terminal; and
a controller for determining whether the first alarm is operated based on the above-set alarm function when it is time to operate the first alarm, and for operating the first alarm or restricting the operation of the first alarm based on the result of the determination.

11. The mobile terminal of claim 10, wherein the alarm setting information sets a second alarm, operation of which is determined according to whether a termination input for the first alarm is received, in conjunction with the first alarm.

12. The mobile terminal of claim 11, wherein the controller determines whether the termination input for the first alarm is received after the first alarm is operated when it is time to operate the second alarm, restrict the operation of the second alarm when receiving the termination input, and operate the second alarm when the termination input is not received.

13. The mobile terminal of claim 10, wherein the alarm setting information sets a position in which an operation of the first alarm is restricted.

14. The mobile terminal of claim 13, wherein the controller recognizes position information of the mobile terminal when it is time to operate the first alarm, and restricts the operation of the first alarm when a current position of the mobile terminal is the position in which the operation of the first alarm is restricted.

15. The mobile terminal of claim 10, wherein the alarm setting information sets an operation state of the mobile terminal in which an operation of the first alarm is restricted,
wherein the controller recognizes whether the mobile terminal is moved through the sensor when it is time to operate the first alarm, and restricts the operation of the first alarm when a movement of the mobile terminal is detected,
wherein the controller extends a termination time of the first alarm, according to a number of times of repetition of the received pattern, when receiving an input of a predefined pattern while operating the first alarm,
wherein the alarm functions include at least one of a linkage function, a position-based function, a movement-based function, and a periodic alarm extension function.
